# EUROPEAN PATENT SPECIFICATION

(11) **EP 4 013 731 B1**
(45) Date of publication and mention of the grant of the patent: **29.10.2025**
(21) Application number: 20750561.1
(22) Date of filing: 12.08.2020
(51) Int. Cl.: C05C 9/00, C05G 3/90, C05D 5/00, C05D 9/02

(54) **IMPROVED UREA-BASED COMPOSITION AND METHOD FOR THE MANUFACTURE THEREOF**
VERBESSERTE HARNSTOFFBASIERTE ZUSAMMENSETZUNG UND VERFAHREN ZUR HERSTELLUNG DAVON
COMPOSITION AMÉLIORÉE À BASE D'URÉE ET SON PROCÉDÉ DE FABRICATION

(30) Priority: 12.08.2019 EP 19191270
(43) Date of publication of application: 22.06.2022
(73) Proprietor: Yara International ASA, 0277 Oslo (NO)
(72) Inventor: COLPAERT, Filip, 9052 Zwijnaarde (BE); VAN BELZEN, Ruud, 4541 HJ Sluiskil (NL)
(74) Representative: De Clercq & Partners
(86) International application number: PCT/EP2020/072578
(87) International publication number: WO 2021/028460

(56) References cited:
- WO-A1-2018/162533
- CN-A- 103 896 672
- CN-A- 104 860 775
- CN-A- 106 588 372
- CN-A- 109 553 502
- US-A1- 2019 112 241

## Description

### Field of the invention

This invention relates to a homogeneous, solid, particulate, urea-based composition, further comprising a urease inhibitor of the type phosphoric triamide, in particular N-(n-butyl) thiophosphoric triamide (nBTPT), with improved properties for reducing ammonia loss by urease activity in the soil. The invention further relates to a method for the manufacture of a homogeneous, solid, particulate urea-based composition comprising urea and a urease inhibitor of the type phosphoric triamide, in particular N-(n-butyl) thiophosphoric triamide (nBTPT). The product is in particular suitable as a fertilizer.

### Background of the invention

Urea is the most common nitrogen-containing fertilizer. Urea has the highest nitrogen content of all nitrogen-containing fertilizers in common use (46 %). Its consumption worldwide has been considerably increased, from about 20 million tons in the early seventies to about 100 million tons at the beginning of the twenty first century. Nitrogen is the basic constituent for any living system as a constituent of protein.

Unfortunately, nitrogen contained in urea cannot be assimilated directly by the plants and needs to be converted through hydrolysis into ammonium and nitrification into nitrate. Urea is first hydrolysed in the soil under the action of an enzyme, commonly called urease, to produce ammonia and carbon dioxide. Ureases are found in numerous bacteria, fungi, algae, plants and some invertebrates, as well as in soils, as a soil enzyme. Urea hydrolysis tends to increase the pH of its environment as the ammonia is dissolved into the water in the soil, and part of the ammonia can also be released into the atmosphere, a process called ammonia volatilization, thus becoming unavailable for the plant. About 50 weight% of nitrogen can sometimes be lost as a result of the volatilization of ammonia, all depending on the soil type, water content, pH, climate conditions, etc.

The availability of nitrogen, originating from urea, to the root system of plants can be improved by combining a urea-containing fertilizer (i.e. by incorporation or addition) with a urease inhibitor. Urease inhibitors are compounds that are capable of temporarily reducing the activity of the enzyme and slow down the rate at which urea is hydrolysed, avoiding peaks of ammonia concentration, allowing the plants to absorb the ammonium or nitrate ions as they are produced and therefore limiting the losses to the air. There are many compounds that can inhibit urease, but only a few that are non-toxic, effective at low concentrations, chemically stable enough and able to be combined with urea-containing fertilizers.

Among the most effective urease inhibitors known today are the phosphoric triamide compounds, first disclosed in US 4,530,714 (Allied Corporation, 1985).

An example of an effective urease inhibitor, disclosed in said patent is N-(n-butyl) thiophosphoric triamide, which will be referred to herein as nBTPT. This compound is actually the precursor for the active compound N-(n-butyl) phosphoric triamide (nBPT), obtained through oxidation of the thio-compound, but it is the thio-compound that is commonly produced, sold and used. Throughout this application, when referring to urease inhibitors of the type phosphoric triamide, it is understood that this comprises all active compounds, active precursors and active conversion products, resulting from said phosphoric triamides.

When combined with a urea-containing fertilizer, phosphoric triamide compounds reduce the rate at which urea is hydrolysed to ammonia in the soil. The benefits that are realized as a result of the delayed urea hydrolysis include the following: (1) nutrient nitrogen is available to the plant over a longer period of time, (2) excessive build-up of ammonia in the soil following the application of the urea-containing fertilizer is avoided, (3) the potential for nitrogen loss through ammonia volatilization is reduced, (4) the potential for damage by high levels of ammonia to seedlings and young plants is reduced, (5) plant uptake of nitrogen is increased, and (6) an increase in crop yields is attained. While phosphoric triamide compounds do not directly influence the rate of ammonium nitrification, they do control the levels of ammonium which are subject to the nitrification process and thereby indirectly controls the levels of nitrate nitrogen in the soil.

Although urease inhibitors of the type phosphoric triamide are generally disclosed for use with said urea-based fertilizers, it has been shown, for example in WO2018162533 (Yara, 2018), that the inhibitors are not very stable upon prolonged storage. Moreover, even a urease inhibitor of the type phosphoric triamide in an alkaline organic solvent, such as a mixture of propylene glycol and N-methyl-pyrrolidine, stabilised to allow for long storage time of the solution, is degraded over a prolonged period of time once applied onto a urea-based composition comprising particulate urea. The problem is most relevant for the storage of said urea-based composition, where the urea in particulate form and the urease inhibitor of the type phosphoric triamide are in intimate contact with one another for a prolonged period of time.

WO2018162533 (Yara, 2018) discloses the addition of an alkaline or alkaline-forming compound such as calcium oxide, calcium carbonate and magnesium oxide, to compositions comprising urea and a urease inhibitor of the type phosphoric triamide to increase the stability of the inhibitor upon storage.

US2019/112241A1 (BASF, 2019) discloses fertilizer compositions wherein urea granules are coated with a urease inhibitor composition and magnesium sulfate, so that the fertilizer compositions cannot be considered homogeneous.

CN109553502A (Univ Southwest, 2019) discloses solid blend compositions comprising particulate urea, particulate magnesium sulfate and particulate n-butyl thiophosphoric triamide.

CN103896672A (Institute Applied Ecology CAS, 2014) discloses a solid fertilizer comprising 60 weight% of urea, 5.0 weight% of magnesium sulfate and 1.5 weight% of nBTPT.

CN104860775A (Guangde Limin Irrigation and Water Conservancy Specialized Cooperative, 2015) discloses a solid blend composition comprising particulate urea, particulate magnesium sulfate and a soil conditioner comprising nBTPT, among other components. It does not disclose a solid, particulate, homogeneous composition comprising urea, magnesium sulfate and nBTPT.

CN106588372A (Anhui Kangmu Int Fertilizer, 2017) discloses a solid blend composition comprising particulate urea, particulate magnesium sulfate and particulate nBTPT. It does not disclose a solid, particulate, homogeneous composition comprising urea, magnesium sulfate and nBTPT.

### Summary of the invention

Surprisingly, it was found that preparing a solid, particulate, homogeneous urea-based composition comprising urea, a urease inhibitor of the type phosphoric triamide, in particular nBTPT, and a magnesium sulfate increases the stability of the inhibitor and do not generate significant ammonia emissions.

In one aspect, the invention concerns a solid, particulate, homogeneous urea-based composition comprising urea, 0.0001 to 1 weight% of a urease inhibitor of the type phosphoric triamide, in particular nBTPT, and a magnesium sulfate, and wherein the urea-based particles comprise from 40 to 99 weight% of urea.

In another aspect, the invention concerns the use of the solid, particulate, homogeneous urea-based composition as a fertilizer.

In another aspect, the use of the solid, particulate, homogeneous urea-based composition as an animal feed is disclosed.

In another aspect, the invention concerns a method for the manufacture of a solid, particulate, urea-based composition. The method comprises the steps of: providing a urea-based melt, adding to the melt, 0.0001 to 1 weight% of a urease inhibitor of the type phosphoric triamide in solid particulate or liquid form, in particular wherein the urease inhibitor is N-(n-butyl) thiophosphoric triamide (nBTPT), and a magnesium sulfate, mixing the melt comprising urea, the inhibitor and the magnesium sulfate to obtain an homogeneous melt, particulating the melt to obtain a solid, particulate, homogeneous urea-based composition, optionally, applying a coating to the urea-based composition, wherein the coating is able to increase at least the anti-caking and/or water repellence and/or anti-dust properties of the urea-based composition.

In another aspect, the invention concerns a method for improving the stability of a urease inhibitor of the type phosphoric triamide, in particular N-(n-butyl) thiophosphoric triamide, (nBTPT) in a solid, particulate, homogeneous urea-based composition comprising from 40 to 99 weight% urea and 0.0001 to 1 weight% of a urease inhibitor of the type phosphoric triamide. The method comprises the step of adding a magnesium sulfate to the urea-based composition.

### Brief description of the figures

Figure 1 shows the amount (in percentage) of nBTPT recovered after 110 weeks of storage at room temperature of two products: A contains urea and nBTPT; B contains urea, nBTPT and MgSO₄.
Figure 2 shows the amount (in percentage) of nBTPT recovered after 25 days of storage of two products: A contains urea and nBTPT; B contains urea, nBTPT and MgSO₄.

### Detailed description of the invention

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.
"About" as used herein referring to a measurable value such as a parameter, an amount, a temporal duration, and the like, is meant to encompass variations of +/-20 % or less, in particular +/-10 % or less, more in particular +/-5 % or less, even more in particular +/-1 % or less, and still more in particular +/-0.1 % or less of and from the specified value, in so far such variations are appropriate to perform in the disclosed invention. However, it is to be understood that the value to which the modifier "about" refers is itself also specifically disclosed.
"Comprise", "comprising", and "comprises" and "comprised of" as used herein are synonymous with "include", "including", "includes" or "contain", "containing", "contains" and are inclusive or openended terms that specifies the presence of what follows e.g. component and do not exclude or preclude the presence of additional, non-recited components, features, element, members, steps, known in the art or disclosed therein.
The recitation of numerical ranges by endpoints includes all numbers and fractions subsumed within that range, as well as the recited endpoints.
The expression "weight percent", "%wt" or "weight%", here and throughout the description unless otherwise defined, refers to the relative weight of the respective component based on the overall weight of the formulation.

Surprisingly, it was found that preparing a solid, particulate, homogeneous urea-based composition urea, a urease inhibitor of the type phosphoric triamide, in particular nBTPT, and a magnesium sulfate increased the stability of the inhibitor and did not generate ammonia emissions.

In one aspect, this document discloses a solid, particulate, homogeneous urea-based composition comprising urea, 0.0001 to 1 weight% of a urease inhibitor of the type phosphoric triamide, in particular nBTPT, and a magnesium sulfate.

By integrating the stabilizer, the magnesium sulfate, into the urea-based composition comprising a urease inhibitor of the type phosphoric triamide, the stability of the urease inhibitor of the type phosphoric triamide is greatly improved, especially during storage, such that lower amounts of said urease inhibitor may be used.

It may be an advantage to use homogeneous urea-based fertilizer particles comprising a urease inhibitor as opposed to fertilizers coated with the inhibitor, as the inhibitor is released at the same relative rate as the nutrients in the homogeneous composition. In a coated product, the inhibitor is released first and may lose its efficiency, be decomposed or washed away before the urea is completely released in the soil.

Furthermore, adding an additive such as a urease inhibitor and/or a stabilizer in a melt ensures a consistent content of this additive in the final solid, particulate composition. Additives added as solid particles and coated onto solid particles may not attach to the particle well enough to go through handling, storage and distribution operations without losing a significant amount of such additives. In addition, it may be considered easier to apply an additive in a melt compared to applying as a coating. Production processes already comprise tanks where the additive may be added whereas a coating application may require additional equipment and process steps. Lastly, coating a solid, particulate composition with a solid increases the dust formation of the solid, particulate composition, which is highly undesirable: this may create health issues, it may slow down or complicate handling, storage and transport operations of the solid, particulate compositions.

A homogeneous solid particle, as used herein, means that the solid particle is uniform with respect to its composition throughout the particle. In contrast, a heterogeneous particle varies in its composition throughout the particle.

In one embodiment, the average particle size (dp50) of the composition is between 1.0 mm and 5 cm, as determined by mesh sieve screening. The particulate composition should have a minimum average particle size of 1.0 mm, so that it may be distributed by conventional means in agricultural fields. It should not be too big as well, as this may prevent the composition from being used with conventional spreading means.

### Urease Inhibitor

In one embodiment, the urease inhibitor of the type phosphoric triamide is a compound of formula I: 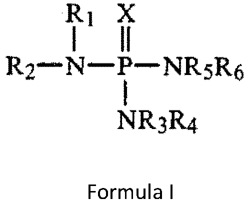 wherein:
- X is oxygen or sulphur;
- R₁ is alkyl, cycloalkenyl, aralkyl, aryl, alkenyl, alkynyl, or cycloalkyl;
- R₂ is hydrogen, alkyl, cycloalkenyl, aralkyl, aryl, alkenyl, alkynyl, or cycloalkyl, or R₁ and R₂ together may form an alkylene or alkenylene chain which may optionally include one or more heteroatoms of divalent oxygen, nitrogen or sulphur completing a 4, 5, 6, 7, or 8 membered ring system; and
- R₃, R₄, R₅ and R₆ are individually hydrogen or alkyl having 1 to 6 carbon atoms.

The terms alkyl, cycloalkenyl, aralkyl, aryl, alkenyl, alkynyl, and cycloalkyl as used herein, refer to compounds having up to 10 carbon atoms, in particular up to 6 carbon atoms. The lowest number of carbon atoms is between 1 and 3 depending on the structure of the substituent.

In one embodiment, the urease inhibitor is N-(n-butyl) thiophosphoric triamide (nBTPT). nBTPT is sold as the most effective known urease inhibitor and has the following chemical formula II 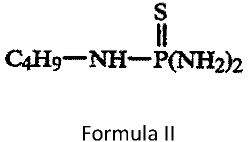 It should be understood that the term nBTPT, as used throughout this specification, refers not only to N-(n-butyl) thiophosphoric triamide in its pure form, but also to industrial grades of this compound which may contain up to 50 weight% impurities, depending on the method of synthesis and purification scheme(s), if any, employed in the production of the nBTPT.

The urease inhibitor, in particular N-(n-butyl) thiophosphoric triamide (nBTPT), is present at a level of 0.0001 to 1 weight% relative to the total weight of the urea-based composition. In one embodiment, the urease inhibitor is present at a level of 0.02 to 0.2 weight%, more in particular 0.03 to 0.06 weight%, relative to the total weight of the urea-based composition. In order to be effective, the urease inhibitor of the type phosphoric triamide, in particular N-(n-butyl) thiophosphoric triamide (nBTPT) is present in the urea-based composition at a level of 0.0001 to 1 weight%, in particular 0.02 to 0.2 weight%, more in particular 0.03 to 0.06 weight%, relative to the total weight of the urea-based composition.

In one embodiment, the weight ratio of urease inhibitor of the type phosphoric triamide to magnesium sulfate ranges from 1:100 to 1:1, in particular from 1:50 to 1:1, more in particular from 1:20 to 1:1. An exemplary weight ratio is 1:17.

According to one embodiment, the urease inhibitor can be a liquid at room temperature, a liquid at elevated temperature, or a solid which is dissolved (solution) or suspended (suspension) into a liquid carrier, all of which are different liquid forms of the urease inhibitor of the type phosphoric triamide, in particular N-(n-butyl) thiophosphoric triamide (nBTPT).

In embodiments where the urease inhibitor of the type phosphoric triamide, in particular N-(n-butyl) thiophosphoric triamide (nBTPT), is used as a liquid, it may be used as a 0.1 to 75 weight% solution, in particular as a 15 to 30 weight% solution, relative to the total weight of the solution. Commercial solutions are available, for example as Agrotain^{®} Ultra (Koch, US), N Yield^{™} (Eco Agro, The Netherlands), Rhodia Ag-Rho^{™} N Protect B (Solvay, Germany), Iper N-Protect Liquid (Van Iperen, The Netherlands) and BASF Limus (BASF, Germany).

In embodiments where the urease inhibitor nBTPT is used as a liquid, dissolved into a carrier, it can be used as a powder, dissolved in propylene glycol, for example as 17.5 weight% of nBTPT. It is available from Yara International ASA (Norway) as Amiplus^{®} liquid.

Experiments showed that, in compositions according to the invention, less urease inhibitor of the type phosphoric triamide, in particular N-(n-butyl) thiophosphoric triamide (nBTPT) needs to be used than is commonly employed in the prior art. For example, according to the invention, an amount of 0.05 weight% may be used, while for the use of Agrotain^{®} Ultra, an amount of 0.09 weight% is recommended. This finding can at least partly be attributed to the fact that in the compositions according to the invention, the urease inhibitor of the type phosphoric triamide, in particular N-(n-butyl) thiophosphoric triamide (nBTPT) is stabilized, while in the prior art, an overdose is needed to compensate for the degradation of the urease inhibitor and to increase shelf-life thereof. This finding also ensures that less urease inhibitor of the type phosphoric triamide, in particular N-(n-butyl) thiophosphoric triamide (nBTPT) is introduced into the environment.

In embodiments where the urease inhibitor is used in its solid form, it is used as a powder, in particular with a purity of 99 weight% or more. It is available, for example, from Sunfit Chemical Co. (China).

The urease inhibitor of the type phosphoric triamide, in particular N-(n-butyl) thiophosphoric triamide (nBTPT) can also be applied to the urea-based composition by hot melt mixing, as described in US 5,352,265 (Weston et al., 1994), which discloses that nBTPT is incorporated into the homogeneous granular fertilizer composition by blending a concentrated solution of nBTPT in a solvent selected from the group of liquid amides, 2-pyrrolidone, and N-alkyl 2-pyrrolidones, directly into the molten urea prior to its granulation.

### Magnesium sulfate

In one embodiment, the magnesium sulfate in the urea-based composition is present in the composition at a level of 0.001 to 5.0 weight%, in particular 0.02 to 3.0 weight%, more in particular 0.05 to 2.0 weight%, even more in particular 0.1 to 1.0 weight% relative to the total weight of the composition.

Magnesium sulfate is an inorganic salt with the chemical formula MgSO₄.x(H₂O) where 0≤x≤7. It is solid at room temperature and is available in powder form with various average particle sizes (d₅₀), such as between 5 and 1000 µm. A variety of hydrates is known. The heptahydrate MgSO₄.7(H₂O) (epsomite) can be prepared by neutralizing sulfuric acid with magnesium carbonate or oxide, but it is usually obtained directly from natural sources. The heptahydrate readily loses one equivalent of water to form the hexahydrate. The monohydrate, MgSO₄·H₂O is found as the mineral kieserite. It can be prepared by heating the hexahydrate to approximately 150 °C. Further heating to approximately 200 °C gives anhydrous magnesium sulfate.

In one embodiment of the present invention, the magnesium sulfate is selected from the group of anhydrous, mono-, di-, tri-, tetra-, penta-, hexa-, heptahydrate, and mixtures thereof. In one embodiment, the magnesium sulfate is a magnesium sulfate hydrate, in particular, magnesium sulfate heptahydrate (MgSO₄·7H₂O). It was observed that the source of magnesium sulfate did not have a significant effect on the stability of the urease inhibitor. The hydrate compounds are generally cheaper than the anhydrous powder and have a longer shelf-life.

According to a particular embodiment of the present invention, the magnesium sulfate has a purity of > 70 %, in particular > 80 %, more in particular > 90 %, even more in particular > 99 %.

### Urea

The solid, particulate, urea-based composition comprises from about 40 to 99 weight% of urea.

In one embodiment, to serve as a fertilizer, the average particle size (dp50) of the urea in particulate form is between 1.0 mm and 5 cm, in particular between 1.0 mm and 1 cm, more in particular between 1.0 and 6.0 mm, even more in particular between 2.0 and 4.0 mm, even more in particular between 3.0 and 5.0 mm, and even more in particular between 2.5 and 3.6 mm, as determined by mesh sieve screening.

The urea may be particulated by any commonly used technology, like for instance: granulation, prilling, pelleting, rotoforming, etc..

The composition may comprise other fertilizer elements: primary elements, such as potassium and phosphorous, secondary elements, such as sulfur, which may be in the form of elemental sulfur or a sulfate salt, magnesium and calcium, and micronutrients, such as boron, copper, iron, manganese, molybdenum and zinc. The composition may also comprise other sources of nitrogen, such as ammonium or nitrate salts. The composition may be supplemented with these nutrients or be treated in any other way.

In one embodiment, the composition comprises at least one compound selected from the list of ammonium nitrate, calcium nitrate, calcium ammonium nitrate, sodium nitrate, ammonium sulfate nitrate, potassium ammonium nitrate, ammonium phosphate, such as mono-ammonium phosphate (MAP) and di-ammonium phosphate (DAP), calcium bis(dihydrogen)-orthophosphate, super phosphate, triple superphosphate, rock phosphate, potassium sulfate, potassium magnesium sulfate, ammonium sulfate (AS), potassium chloride (MOP), magnesium nitrate, and mixtures thereof.

It may contain any other processing additive, such as granulation additive, typically a ureaformaldehyde condensate, etc.

### Anti-caking and/or moisture repellent and/or anti-dust coating

In one embodiment, the composition comprises an anti-caking and/or moisture repellent and/or anti-dust coating, wherein the coating material is able to increase the moisture repellence of the urea-based composition. Furthermore, the coating may also be able to reduce dust formation.

In one embodiment, the coating material is a non-polar material, in particular a liquid organic material, such as an oil, wax, resin or the like and any mixture thereof. The coating material is present in the composition at a level of 0.0001 to 1 weight%, in particular 0.02 to 0.5 weight%, more in particular 0.1 to 0.2 weight%, relative to the total weight of the composition.

Examples of suitable anti-caking and/or moisture-repellent coatings are vegetable oil (e.g. rapeseed or neem), paraffin and Novoflow anti-caking and/or moisture repellence agents (Novochem Fertilizer Additives, The Netherlands).

In one embodiment, the moisture-repellent coating is a coating such as disclosed in EP 0768993 (Norsk Hydro ASA), for a nitrogen-containing fertilizer, comprising at least a wax, an oil and a resin which is oil-soluble and miscible with wax (Tropicote^{®}).

In one embodiment, the coating can be a formaldehyde-based or urea formaldehyde-based coating.

In one embodiment, the composition comprises 40 to 99 weight% of urea, 0 to 60 weight% of at least one compound selected from the list of ammonium nitrate, calcium nitrate, calcium ammonium nitrate, sodium nitrate, ammonium sulfate nitrate, potassium ammonium nitrate, ammonium phosphate, such as mono-ammonium phosphate (MAP) and di-ammonium phosphate (DAP), calcium bis(dihydrogen)-orthophosphate, super phosphate, triple superphosphate, rock phosphate, potassium sulfate, potassium magnesium sulfate, ammonium sulfate (AS), potassium chloride (MOP), magnesium nitrate, and mixtures thereof, 0.0001 to 1.0 weight% of a urease inhibitor of the type phosphoric triamide, 0.0001 to 5.0 weight% of a magnesium sulfate, in particular magnesium sulfate heptahydrate, 0 to 1.0 weight% of an anti-caking and/or moisture repellent and/or anti-dust coating, adding up to 100 weight%, being the total weight of the composition.

In another aspect, the use of the solid, particulate, homogeneous urea-based composition as a fertilizer, in particular for supporting the growth of agricultural products on sulfur - deficient soil, is disclosed. Sulfur-deficient soils are a growing problem: since sulfur is a component of numerous protein enzymes that regulate photosynthesis and nitrogen fixation, when sulfur is limiting, there is less chlorophyll production, which makes the younger leaves of the plant appear yellow, a symptom sometimes confused with N-deficiency.

In another aspect, the use of the solid, particulate, homogeneous urea-based composition as an animal feed is disclosed. It is well known in the field of agriculture that urea-based compositions may be fed to animals as a supplementary source of nitrogen. The urea-based composition may be given as such to the animals, or mixed with other food sources, such as forage or other mineral feed sources.

In another aspect, a method for the manufacture of a solid, particulate, urea-based composition is disclosed. The method comprises the steps of: providing a urea-based melt, adding to the melt, 0.0001 to 1 weight% of a urease inhibitor of the type phosphoric triamide in solid particulate or liquid form, in particular wherein the urease inhibitor is N-(n-butyl) thiophosphoric triamide (nBTPT), and a magnesium sulfate, mixing the melt comprising urea, the inhibitor and the magnesium sulfate to obtain an homogeneous melt, particulating the melt to obtain a solid, particulate, homogeneous urea-based composition, optionally, applying a coating to the urea-based composition, wherein the coating is able to increase at least the anticaking and/or water repellence and/or anti-dust properties of the urea-based composition.

A urea melt is a mixture comprising urea, in particular at least 80% urea, and water. Urea has a melting point of 133 °C, so a mixture comprising urea and water has a melting point below 130 °C.

It was found that the order of addition of the components magnesium sulfate and the urease inhibitor of the type phosphoric triamide, in the urea melt had little effect on the performance of the claimed effects. In one embodiment, the magnesium sulfate is added before the urea inhibitor. It may be an advantage to introduce the stabilizer of the inhibitor in the melt before the inhibitor to ensure that the stabilizer can slow down the decomposition of the inhibitor as soon as the inhibitor is introduced in the melt.

Since the melt already contains water, it is not necessary to use anhydrous components, such as anhydrous magnesium sulfate. The cheaper magnesium sulfate hydrate may be used without affecting the quality of the final particulate products or the stability of the urease inhibitor.

To particulate a urea-based melt and obtain solid particles, a number of methods are well known in the art, for example prilling and granulating. The water-content of the melt needs to be adjusted depending on the particulating method chosen. So the melt may be heated up after addition of the urease inhibitor and the magnesium sulfate to reach the desired water content.

In another aspect, a method for improving the stability of a urease inhibitor of the type phosphoric triamide, in particular N-(n-butyl) thiophosphoric triamide, (nBTPT) in a solid, particulate, homogeneous urea-based composition comprising urea and a urease inhibitor of the type phosphoric triamide is disclosed. The method comprises the step of adding a magnesium sulfate to the urea-based composition.

### Further effects

It was also observed that, under bagged conditions without the presence of a head space, i.e. with the substantial exclusion of moisture, atmospheric gasses such as oxygen, nitrogen, etc., the stability of the urease inhibitor of the type phosphoric triamide, in particular N-(n-butyl) thiophosphoric triamide (nBTPT) in the composition according to the invention, was further increased. Hence, the invention is in particular directed to a packaged, in particular bagged, urea-based composition comprising urea in particulate form. As used in this application, "bagged" means that the product is packaged such that it is in essence not in contact with moisture and atmospheric gasses during the period it is packaged. Hence, the package may be a bag, big bag, container, box, etc., being in principle all packaging without the substantial presence of a head space, filled with an atmosphere, such as air. As used in this application, "bagged" further means that the product is packaged in manageable unit amounts, such as 5 kg, 10 kg, 15 kg, 20 kg, 25 kg, 50 kg, or more, and usually packaged using a plastic material, in particular a foil, from such materials as paper, cardboard, polyethylene, polyvinyl and polycarbonate.

One embodiment refers to a container or package comprising the urea-based composition as disclosed herein, wherein the head space in said container or package is less than about 1%.

In the context of the present invention, the term "headspace" refers to the volume left at the top of the almost filled container before or after sealing.

In the context of the present invention, the term "about", when associated with the headspace, means +/- 0.1%. For example, "about 1%" means that 1.1%, 1.05%, 0.95% or 0.9% are also encompassed.

In one embodiment, the container as described herein comprises a headspace of less than 1%, in particular less than 0.75%, more in particular less than 0.5%, even more in particular less than 0.25% and even more in particular no head-space, based on the total volume of said container.

### Examples

The following examples are included to demonstrate certain embodiments of the invention. It should be appreciated by the skilled person that the techniques disclosed in the examples represent techniques discovered by the inventors to function well in the practice of the invention. The skilled person should, however, in light of the present invention, appreciate that many changes can be made in the specific embodiments that are dis-closed and still obtain a like or similar result without departing from the spirit and scope of the invention, therefore all matter set forth is to be interpreted as illustrative and not in a limiting sense.

### Example 1:

Fertilizer particles were produced in the urea pilot plant in Sluiskil (Yara International ASA). This pilot plant has a batch capacity - after sieving - of about 50 kg of on-spec product. It basically consists of a stirred urea preparation vessel with an active volume of about 150 litres and a fluidized bed granulator of the UFT-type, equipped with a spraying nozzle of the spiral-type or HFT-type (EP 1701798 B1, 2005, Yara International ASA). A urea melt was prepared and the urease inhibitor nBTPT, used as a powder or liquid formulations, and the magnesium sulfate, if applicable, were added to the urea melt, which was subsequently granulated in the fluidized bed granulator. Two products were compared: urea granules comprising 0.06 weight% of nBTPT without any magnesium sulfate, and urea granules comprising 0.06 weight% of nBTPT and 1.0 weight% of magnesium sulfate heptahydrate. The amount of nBTPT in the granules at the beginning and at the end of the experiments was measured by HPLC according to procedure CEN 15688-2007.

Solid N-(n-butyl)thiophosphoric triamide was obtained from Sunfit Chemical Co. (China) (CAS-Nr. 94317-64-3), as a white crystalline solid with a melting point of 58-60 °C. Magnesium sulfate heptahydrate (CAS-Nr 10034-99-8) was obtained from Merck. The products were kept for 110 weeks at room temperature in bags.

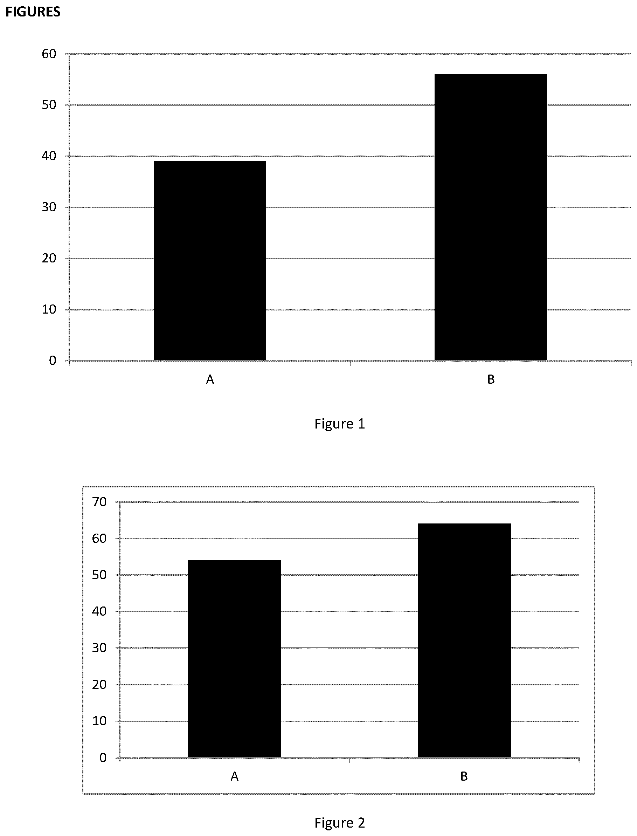

Figure 1 shows the amount (in percentage) of nBTPT recovered after 26 weeks of storage at room temperature of the two products: **A** contains urea and nBTPT; **B** contains urea, nBTPT and MgSO₄. The products according to the invention and comprising urea, nBTPT and MgSO₄ show a much higher degree of recovery compared to the products containing only nBTPT (56% of nBTPT recovered compared to 39%). And no significant smells of ammonia was noted during the storage.

Figure 2 shows the amount (in percentage) of nBTPT recovered after 25 days of storage at 70 °C for 25 days of the same products. The products according to the invention comprising urea, nBTPT and MgSO₄ show a higher degree of recovery compared to the products containing only nBTPT (64% of nBTPT recovered compared to 54%).

## Claims

1. Homogeneous urea-based particles comprising urea, 0.0001 to 1 weight% of a urease inhibitor of the type phosphoric triamide, **characterized in that** the particles comprise a magnesium sulfate and that the urea-based particles comprise from 40 to 99 weight% of urea.

2. The homogeneous urea-based particles according to claim 1, **characterized in that** the average particle size (dp50) of the particles is between 1.0 mm and 5 cm, as determined by mesh sieve screening.

3. The homogeneous urea-based particles according to any one of claims 1 to 2, **characterized in that** the urease inhibitor of the type phosphoric tri-amide is a compound of formula: 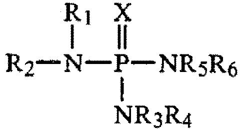 wherein:
- X is oxygen or sulphur;
- R₁ is alkyl, cycloalkenyl, aralkyl, aryl, alkenyl, alkynyl, or cycloalkyl;
- R₂ is hydrogen, alkyl, cycloalkenyl, aralkyl, aryl, alkenyl, alkynyl, or cycloalkyl ; or R₁ and R₂ together may form an alkylene or alkenylene chain which may optionally include one or more heteroatoms of diva-lent oxygen, nitrogen or sulphur completing a 4, 5, 6, 7, or 8 membered ring system; and
- R₃, R₄, R₅ and R₆ are individually hydrogen or alkyl having 1 to 6 carbon atoms;
particularly wherein the urease inhibitor of the type phosphoric tri-amide is N-(n-butyl) thiophosphoric triamide (nBTPT).

4. The homogeneous urea-based particles according to any one of claims 1 to 3, wherein the urease inhibitor, in particular N-(n-butyl) thiophosphoric triamide (nBTPT), is present at a level 0.02 to 0.2 weight%, more in particular 0.03 to 0.06 weight%, relative to the total weight of the urea-based particles.

5. The homogeneous urea-based particles according to any one of claims 1 to 4, wherein the magnesium sulfate is a magnesium sulfate hydrate, in particular magnesium sulfate heptahydrate, MgSO₄·7H₂O.

6. The homogeneous urea-based particles according to any one of claims 1 to 5, wherein the magnesium sulfate is present in the particles at a level of 0.001 to 5.0 weight%, in particular 0.02 to 3.0 weight%, more in particular 0.05 to 2.0 weight%, even more in particular 0.1 to 1.0 weight% relative to the total weight of the particles.

7. The homogeneous urea-based particles according to any one of claims 1 to 6, wherein the weight ratio of urease inhibitor of the type phosphoric triamide to the magnesium sulfate ranges from 1:100 to 1:1, in particular from 1:50 to 1:1, more in particular from 1:20 to 1:1.

8. The homogeneous urea-based particles according to any one of claims 1 to 7, wherein the particles comprise an anti-caking and/or moisture repellent and/or anti-dust coating; in particular wherein the coating comprises at least a non-polar material, in particular a liquid organic material, such as an oil, wax, resin or the like and any mixture thereof and is present in the particles at a level of 0.0001 to 1.0 weight%, in particular 0.02 to 0.5 weight%, more in particular 0.1 to 0.2 weight%, relative to the total weight of the particles.

9. The homogeneous urea-based particles according to any one of claims 1 to 8, wherein the urea-based particles are packaged without the presence of a head space.

10. The homogeneous urea-based particles according to any one of claims 1 to 9, wherein the homogeneous urea-based particles comprise at least one compound selected from the list of ammonium nitrate, calcium nitrate, calcium ammonium nitrate, sodium nitrate, ammonium sulphate nitrate, potassium ammonium nitrate, ammonium phosphate, such as mono-ammonium phosphate (MAP) and di-ammonium phosphate (DAP), calcium bis(dihydrogen)-orthophosphate, super phosphate, triple superphosphate, rock phosphate, potassium sulphate, potassium magnesium sulphate, ammonium sulphate (AS), potassium chloride (MOP), magnesium nitrate, and mixtures thereof .

11. The homogeneous urea-based particles according to any one of claims 1 to 10, wherein the particles comprise:
- 40 to 99 weight% of urea;
- 0 to 60 weight% of one or more compounds selected from the group as defined in claim 10;
- 0.0001 to 1.0 weight% of a urease inhibitor of the type phosphoric triamide;
- 0.0001 to 5.0 weight% of a magnesium sulfate;
- 0 to 1.0 weight% of an anti-caking and/or moisture repellent and/or anti-dust coating;
adding up to 100 weight%, being the total weight of the particles.

12. A composition comprising homogeneous urea-based particles according to any of the preceding claims.

13. Use of the homogeneous urea-based particles as claimed in anyone of claims 1 to 11, or use of the composition of claim 12 as a fertilizer.

14. A method for the manufacture of homogeneous urea-based particles as defined in any one of claims 1 to 11, the method comprising the steps of:
1) providing a urea-based melt;
2) adding to the melt provided in step 1) 0.0001 to 1 weight% of a urease inhibitor of the type phosphoric triamide in solid particulate or liquid form, in particular wherein the urease inhibitor is N-(n-butyl) thiophosphoric triamide (nBTPT), and a magnesium sulfate ;
3) mixing the melt obtained in step 2) to obtain an homogeneous melt;
4) particulating the melt by a suitable method to obtain homogeneous urea-based particles;
5) optionally, applying a coating to the urea-based particles obtained in step 4), wherein the coating is able to increase at least the anticaking and/or water repellence and/or anti-dust properties of said urea-based particles.

15. A method for improving the stability of a urease inhibitor of the type phosphoric triamide, in particular N-(n-butyl) thiophosphoric triamide, (nBTPT), in homogeneous urea-based particles comprising from 40 to 99 weight% urea, 0.0001 to 1 weight% of a urease inhibitor of the type phosphoric triamide by the addition to the urea-based particles of a magnesium sulfate.

## Patentansprüche

1. Homogene Teilchen auf Harnstoffbasis, umfassend Harnstoff und 0,0001 bis 1 Gew.-% eines Ureasehemmers vom Phosphorsäuretriamidtyp, **dadurch gekennzeichnet, dass** die Teilchen ein Magnesiumsulfat umfassen und dass die Teilchen auf Harnstoffbasis 40 bis 99 Gew.-% Harnstoff umfassen.

2. Homogene Teilchen auf Harnstoffbasis nach Anspruch 1, **dadurch gekennzeichnet, dass** die durchschnittliche Teilchengröße (dp50) der Teilchen gemäß Bestimmung durch Maschensieb-Siebung zwischen 1,0 mm und 5 cm liegt.

3. Homogene Teilchen auf Harnstoffbasis nach einem der Ansprüche 1 bis 2, **dadurch gekennzeichnet, dass** es sich bei dem Ureasehemmer vom Phosphorsäuretriamidtyp um eine Verbindung der Formel I: 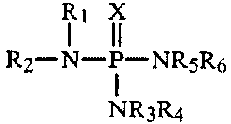 handelt, wobei:
- X für Sauerstoff oder Schwefel steht;
- R₁ für Alkyl, Cycloalkenyl, Aralkyl, Aryl, Alkenyl, Alkinyl oder Cycloalkyl steht;
- R₂ für Wasserstoff, Alkyl, Cycloalkenyl, Aralkyl, Aryl, Alkenyl, Alkinyl oder Cycloalkyl steht oder R₁ und R₂ gemeinsam unter Vervollständigung eines 4-, 5-, 6-, 7- oder 8-gliedrigen Ringsystems eine Alkylen- oder Alkenylenkette, die gegebenenfalls ein oder mehrere Heteroatome von zweiwertigem Sauerstoff, Stickstoff oder Schwefel enthalten kann, bilden können; und
- R₃, R₄, R₅ und R₆ jeweils für Wasserstoff oder Alkyl mit 1 bis 6 Kohlenstoffatomen stehen;
insbesondere wobei es sich bei dem Ureasehemmer vom Phosphorsäuretriamidtyp um N-(n-Butyl)thiophosphorsäuretriamid (nBTPT) handelt.

4. Homogene Teilchen auf Harnstoffbasis nach einem der Ansprüche 1 bis 3, wobei der Ureasehemmer, insbesondere N-(n-Butyl)thiophosphorsäuretriamid (nBTPT), in einem Gehalt von 0,02 bis 0,2 Gew.-%, spezieller 0,03 bis 0,06 Gew.-%, bezogen auf das Gesamtgewicht der Teilchen auf Harnstoffbasis, vorliegt.

5. Homogene Teilchen auf Harnstoffbasis nach einem der Ansprüche 1 bis 4, wobei es sich bei dem Magnesiumsulfat um ein Magnesiumsulfathydrat, insbesondere Magnesiumsulfatheptahydrat, MgSO₄-7H₂O, handelt.

6. Homogene Teilchen auf Harnstoffbasis nach einem der Ansprüche 1 bis 5, wobei das Magnesiumsulfat in den Teilchen in einem Gehalt von 0,001 bis 5,0 Gew.-%, insbesondere 0,02 bis 3,0 Gew.-%, spezieller 0,05 bis 2,0 Gew.-%, noch spezieller 0,1 bis 1,0 Gew.-%, bezogen auf das Gesamtgewicht der Teilchen, vorliegt.

7. Homogene Teilchen auf Harnstoffbasis nach einem der Ansprüche 1 bis 6, wobei das Gewichtsverhältnis von Ureasehemmer vom Phosphorsäuretriamidtyp zu Magnesiumsulfat im Bereich von 1:100 bis 1:1, insbesondere von 1:50 bis 1:1, spezieller von 1:20 bis 1:1, liegt.

8. Homogene Teilchen auf Harnstoffbasis nach einem der Ansprüche 1 bis 7, wobei die Teilchen einen Antiback- und/oder feuchtigkeitsabweisenden und/oder Antistaubüberzug umfassen; insbesondere wobei der Überzug mindestens ein unpolares Material, insbesondere ein flüssiges organisches Material, wie ein Öl, ein Wachs, ein Harz oder dergleichen, und eine beliebige Mischung davon umfasst und in den Teilchen in einem Gehalt von 0,0001 bis 1,0 Gew.-%, insbesondere 0,02 bis 0,5 Gew.-%, spezieller 0,1 bis 0,2 Gew.-%, bezogen auf das Gesamtgewicht der Teilchen, vorliegt.

9. Homogene Teilchen auf Harnstoffbasis nach einem der Ansprüche 1 bis 8, wobei die Teilchen auf Harnstoffbasis ohne das Vorliegen eines Kopfraums verpackt sind.

10. Homogene Teilchen auf Harnstoffbasis nach einem der Ansprüche 1 bis 9, wobei die homogenen Teilchen auf Harnstoffbasis mindestens eine Verbindung umfassen, die aus der Liste Ammoniumnitrat, Calciumnitrat, Calciumammoniumnitrat, Natriumnitrat, Ammoniumsulfatnitrat, Kaliumammoniumnitrat, Ammoniumphosphat, wie Monoammoniumphosphat (MAP) und Diammoniumphosphat (DAP), Calciumbis(dihydrogenorthophosphat), Superphosphat, Tripelsuperphosphat, Rohphosphat, Kaliumsulfat, Kaliummagnesiumsulfat, Ammoniumsulfat (AS), Kaliumchlorid (MOP), Magnesiumnitrat und Mischungen davon ausgewählt ist.

11. Homogene Teilchen auf Harnstoffbasis nach einem der Ansprüche 1 bis 10, wobei die Teilchen Folgendes umfassen:
- 40 bis 99 Gew.-% Harnstoff;
- 0 bis 60 Gew.-% einer oder mehrerer Verbindungen, die aus der Gruppe gemäß Anspruch 10 ausgewählt sind;
- 0,0001 bis 1,0 Gew.-% eines Ureasehemmers vom Phosphorsäuretriamidtyp;
- 0,0001 bis 5,0 Gew.-% eines Magnesiumsulfats;
- 0 bis 1,0 Gew.-% eines Antiback- und/oder feuchtigkeitsabweisenden und/oder Antistaubüberzugs;
wobei sich die Summe auf 100 Gew.-% beläuft, wobei es sich um das Gesamtgewicht der Teilchen handelt.

12. Zusammensetzung, umfassend homogene Teilchen auf Harnstoffbasis nach einem der vorhergehenden Ansprüche.

13. Verwendung der homogenen Teilchen auf Harnstoffbasis nach einem der Ansprüche 1 bis 11 oder Verwendung der Zusammensetzung nach Anspruch 12 als Dünger.

14. Verfahren zur Herstellung von homogenen Teilchen auf Harnstoffbasis gemäß einem der Ansprüche 1 bis 11, wobei das Verfahren die folgenden Schritte umfasst:
1) Bereitstellen einer Schmelze auf Harnstoffbasis;
2) Zugeben von 0,0001 bis 1 Gew.-% eines Ureasehemmers vom Phosphorsäuretriamidtyp in fester teilchenförmiger oder flüssiger Form, insbesondere wobei es sich bei dem Ureasehemmer um N-(n-Butyl)-thiophosphorsäuretriamid (nBTPT) handelt, und eines Magnesiumsulfats zu der in Schritt 1) bereitgestellten Schmelze;
3) Mischen der in Schritt 2) erhaltenen Schmelze unter Erhalt einer homogenen Schmelze;
4) Bilden von Teilchen aus der Schmelze durch ein geeignetes Verfahren unter Erhalt von homogenen Teichen auf Harnstoffbasis;
5) gegebenenfalls Aufbringen eines Überzugs auf die in Schritt 4) erhaltenen Teilchen auf Harnstoffbasis, wobei der Überzug in der Lage ist, zumindest die Antiback- und/oder wasserabweisenden und/oder Antistaubeigenschaften der Teilchen auf Harnstoffbasis zu erhöhen.

15. Verfahren zur Verbesserung der Stabilität eines Ureasehemmers vom Phosphorsäuretriamidtyp, insbesondere N-(n-Butyl)thiophosphorsäuretriamid (nBTPT), in homogenen Teilchen auf Harnstoffbasis, die 40 bis 99 Gew.-% Harnstoff und 0,0001 bis 1 Gew.-% eines Ureasehemmers vom Phosphorsäuretriamidtyp umfassen, durch Zugabe eines Magnesiumsulfats zu den Teilchen auf Harnstoffbasis.

## Revendications

1. Particules homogènes à base d'urée comprenant de l'urée, 0,0001 à 1 % en poids d'un inhibiteur d'uréase du type triamide phosphorique, **caractérisées en ce que** les particules comprennent un sulfate de magnésium et **en ce que** les particules à base d'urée comprennent de 40 à 99 % en poids d'urée.

2. Particules homogènes à base d'urée selon la revendication 1, **caractérisées en ce que** la taille moyenne de particule (dp50) des particules est comprise entre 1,0 mm et 5 cm, comme déterminée par tamis à mailles.

3. Particules homogènes à base d'urée selon l'une quelconque des revendications 1 à 2, **caractérisées en ce que** l'inhibiteur d'uréase du type triamide phosphorique est un composé de formule : 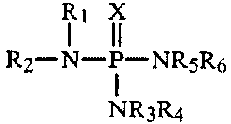 dans lesquelles :
- X est oxygène ou soufre ;
- R₁ est alkyle, cycloalcényle, aralkyle, aryle, alcényle, alcynyle ou cycloalkyle ;
- R₂ est hydrogène, alkyle, cycloalcényle, aralkyle, aryle, alcényle, alcynyle ou cycloalkyle, ou R₁ et R₂ peuvent former ensemble une chaîne alkylène ou alcénylène qui peut éventuellement comporter un ou plusieurs hétéroatomes d'oxygène, d'azote ou de soufre divalent complétant un système cyclique à 4, 5, 6, 7 ou 8 chaînons ; et
- R₃, R₄, R₅ et R₆ sont individuellement hydrogène ou alkyle ayant 1 à 6 atomes de carbone ;
particulièrement dans lesquelles l'inhibiteur d'uréase du type triamide phosphorique est le triamide N-(n-butyl)thiophosphorique (nBTPT).

4. Particules homogènes à base d'urée selon l'une quelconque des revendications 1 à 3, dans lesquelles l'inhibiteur d'uréase, en particulier le triamide N-(n-butyl)thiophosphorique (nBTPT), est présent à un taux de 0,02 à 0,2 % en poids, plus particulièrement 0,03 à 0,06 % en poids, par rapport au poids total des particules à base d'urée.

5. Particules homogènes à base d'urée selon l'une quelconque des revendications 1 à 4, dans lesquelles le sulfate de magnésium est un sulfate de magnésium hydraté, en particulier le sulfate de magnésium heptahydraté, MgSO₄-7H₂O.

6. Particules homogènes à base d'urée selon l'une quelconque des revendications 1 à 5, dans lesquelles le sulfate de magnésium est présent dans les particules à un taux de 0,001 à 5,0 % en poids, en particulier 0,02 à 3,0 % en poids, plus particulièrement 0,05 à 2,0 % en poids, encore plus particulièrement 0,1 à 1,0 % en poids par rapport au poids total des particules.

7. Particules homogènes à base d'urée selon l'une quelconque des revendications 1 à 6, dans lesquelles le rapport en poids de l'inhibiteur d'uréase du type triamide phosphorique sur le sulfate de magnésium est dans la plage de 1:100 à 1:1, en particulier de 1:50 à 1:1, plus particulièrement de 1:20 à 1:1.

8. Particules homogènes à base d'urée selon l'une quelconque des revendications 1 à 7, dans lesquelles les particules comprennent un revêtement anti-mottant et/ou hydrofuge et/ou anti-poussière ; en particulier dans lesquelles le revêtement comprend au moins une matière non polaire, en particulier une matière organique liquide, telle qu'une huile, une cire, une résine ou similaire et un quelconque mélange correspondant, et est présent dans les particules à un taux de 0,0001 à 1,0 % en poids, en particulier 0,02 à 0,5 % en poids, plus particulièrement 0,1 à 0,2 % en poids, par rapport au poids total des particules.

9. Particules homogènes à base d'urée selon l'une quelconque des revendications 1 à 8, dans lesquelles les particules à base d'urée sont conditionnées sans la présence d'un espace de tête.

10. Particules homogènes à base d'urée selon l'une quelconque des revendications 1 à 9, dans lesquelles les particules homogènes à base d'urée comprennent au moins un composé choisi dans la liste du nitrate d'ammonium, nitrate de calcium, nitrate de calcium et d'ammonium, nitrate de sodium, nitrate de sulfate d'ammonium, nitrate de potassium et d'ammonium, phosphate d'ammonium, tel que le phosphate mono-ammonium (MAP) et le phosphate di-ammonium (DAP), bis(dihydrogénorthophosphate) de calcium, super phosphate, superphosphate triple, phosphate naturel, sulfate de potassium, sulfate de potassium et de magnésium, sulfate d'ammonium (AS), chlorure de potassium (MOP), nitrate de magnésium ou des mélanges correspondants.

11. Particules homogènes à base d'urée selon l'une quelconque des revendications 1 à 10, dans lesquelles les particules comprennent :
- 40 à 99 % en poids d'urée ;
- 0 à 60 % en poids d'un ou de plusieurs composés sélectionnés parmi le groupe tel que défini dans la revendication 10 ;
- 0,0001 à 1,0 % en poids d'un inhibiteur d'uréase du type triamide phosphorique ;
- 0,0001 à 5,0 % en poids d'un sulfate de magnésium ;
- 0 à 1,0 % en poids d'un revêtement anti-mottant et/ou hydrofuge et/ou anti-poussière ;
totalisant jusqu'à 100 % en poids, qui est le poids total des particules.

12. Composition comprenant des particules homogènes à base d'urée selon l'une quelconque des revendications précédentes.

13. Utilisation des particules homogènes à base d'urée selon l'une quelconque des revendications 1 à 11, ou utilisation de la composition selon la revendication 12 comme engrais.

14. Procédé pour la fabrication de particules homogènes à base d'urée telles que définies dans l'une quelconque des revendications 1 à 11, le procédé comprenant les étapes de :
1) fourniture d'une masse fondue à base d'urée ;
2) ajout à la masse fondue fournie à l'étape 1) 0,0001 à 1 % en poids d'un inhibiteur d'uréase du type triamide phosphorique sous forme solide particulaire ou liquide, en particulier dans lequel l'inhibiteur d'uréase est le triamide N-(n-butyl)thiophosphorique (nBTPT), et un sulfate de magnésium ;
3) mélange de la masse fondue obtenue à l'étape 2) pour obtenir une masse fondue homogène ;
4) mise en particules de la masse fondue par un procédé approprié pour obtenir des particules homogènes à base d'urée ;
5) éventuellement, application d'un revêtement sur les particules à base d'urée obtenues à l'étape 4), dans lequel le revêtement est capable d'augmenter au moins les propriétés anti-mottantes et/ou hydrofuges et/ou anti-poussière desdites particules à base d'urée.

15. Procédé d'amélioration de la stabilité d'un inhibiteur d'uréase du type triamide phosphorique, en particulier du triamide N-(n-butyl)thiophosphorique (nBTPT), dans des particules homogènes à base d'urée comprenant de 40 à 99 % en poids d'urée, 0,0001 à 1 % en poids d'un inhibiteur d'uréase du type triamide phosphorique par l'ajout aux particules à base d'urée d'un sulfate de magnésium.
